# EUROPÄISCHE PATENTSCHRIFT

(11) **EP 1 886 434 B1**
(45) Veröffentlichungstag und Bekanntmachung des Hinweises auf die Patenterteilung: **17.03.2010**
(21) Anmeldenummer: 05755637.5
(22) Anmeldetag: 17.06.2005
(51) Int. Cl.: H04Q 9/00, H02J 3/36

(54) **VERFAHREN ZUR ÜBERTRAGUNG VON DATEN ZUR STEUERUNG EINER HGÜ-ANLAGE**
METHOD FOR TRANSMITTING DATA FOR CONTROLLING AN HVDC SYSTEM
PROCEDE POUR TRANSMETTRE DES DONNEES POUR COMMANDER UN SYSTEME DE TRANSMISSION DE COURANT CONTINU HAUTE TENSION

(30) Priorität: 02.06.2005 WO PCT/DE2005/001026
(43) Veröffentlichungstag der Anmeldung: 13.02.2008
(73) Patentinhaber: SIEMENS AKTIENGESELLSCHAFT, 80333 München (DE)
(72) Erfinder: HÜGELSCHÄFER, Ludwig, 96052 Bamberg (DE); STECHER, Werner, 91183 Abenberg (DE)
(86) Internationale Anmeldenummer: PCT/DE2005/001102
(87) Internationale Veröffentlichungsnummer: WO 2006/128400

(56) Entgegenhaltungen:
- EP-A- 0 492 862
- US-A- 5 170 338
- US-A- 5 406 495
- US-A1- 2004 172 207
- AINSWORTH: "Telecommunication for hvdc control" GEC Journal of Science & Technology UK, Bd. 48, Nr. 3, 1982, Seiten 159-162, XP008063938 ISSN: 0022-4421

## Beschreibung

Die Erfindung betrifft ein Verfahren zur Übertragung von Daten in einer HGÜ-Anlage an ein Steuerungssystem für HGÜ-Anlagen.

Bei bekannten Datenübertragungsverfahren für HGÜ-Anlagen werden Daten von verschiedenen Messeinheiten zu einem Steuerungssystem üblicherweise als analoge elektrische Signale über mehrere Kupferleitungen übertragen. Dazu ist jede Messeinheit mit dem Steuerungssystem verbunden. Dies erfordert einen erheblichen Verkabelungsaufwand, und die Übertragungssicherheit ist aufgrund einer hohen Empfindlichkeit gegenüber elektromagnetischen Störungen gering. Ferner ist durch die Verwendung von Kupferleitungen die räumliche Ausdehnung eines derartigen Mess- und Steuerungssystems begrenzt. Da verschiedene Messeinheiten unterschiedliche Datenmengen unabhängig voneinander an das Steuerungssystem liefern, findet dabei auch keine synchronisierte Übertragung statt.

Die Veröffentlichung von Ainsworth: "Telecommunication for hvdc control" (GEC Journal of Science &; Technology UK, Bd. 48, Nr. 3, 1982, Seiten 159-162) offenbart ein Verfahren zur Übertragung von Daten in einer HGÜ-Anlage, bei dem Messwerte von Messeinheiten der HGÜ-Anlage an zugeordnete Vorverarbeitungseinheiten übertragen werden. Die Vorverarbeitungseinheiten erzeugen aus den empfangenen Messwerten verarbeitbare Messwertdaten, wobei die Messwertdaten als Teil eines Datensatzes übertragen werden, der aus Datenworten zusammengesetzt ist.

US 5406495 (Hill) offenbart ein digitales Datenübertragungssystem zur Überwachung einer analoger elektrischer Messwerte in einer industrielle Anlage. Seriell angeordneten Messeinheiten sind Identifizierungsdaten zugewiesen, die durch eine zentrale Station fordert mittels sogenannten "pollings" der Messeinheiten abgerufen werden. Insbesondere wird hier ein an sich bekanntes Format gemäß dem Standard RS-485 verwendet.

Der Erfindung liegt die Aufgabe zugrunde, ein Datenübertragungsverfahren der eingangs erwähnten Art auszubilden, welches eine flexible und sichere Übertragung der Daten von einer Vielzahl von Messeinheiten an wenigstens ein Steuerungssystem ermöglicht.

Diese Aufgabe wird erfindungsgemäß durch ein Verfahren zur Übertragung von Daten in einer HGÜ-Anlage gelöst, bei dem Messwerte von Messeinheiten der HGÜ-Anlage an zugeordnete Vorverarbeitungseinheiten übertragen werden, welche seriell miteinander verbunden sind, und die Vorverarbeitungseinheiten aus den empfangenen Messwerten verarbeitbare Messwertdaten erzeugen, wobei die Messwertdaten als Teil eines Datensatzes übertragen werden, der aus Datenworten zusammengesetzt ist, und die Datenworte bei der Übertragung in eine zeitliche Folge einzelner Bitgruppen unterteilt sind, und eine erste zu übertragende Bitgruppe Identifizierungsdaten der zugeordneten Vorverarbeitungseinheit und Informationen über die Anzahl der von dieser Vorverarbeitungseinheit zu übertragenden weiteren Bitgruppen umfasst, und wobei eine nachgeschaltete Vorverarbeitungseinheit mittels der Informationen über die die Anzahl der zu übertragenden Bitgruppen einer ihr vorgeschalteten Vorverarbeitungseinheit einen Zeitpunkt zur Übertragung des Datenwortes dieser nachgeschalteten Vorverarbeitungseinheit bestimmt.

Vorteilhaft bei einem solchen Verfahren ist, dass durch die serielle Verbindung der einzelnen Vorverarbeitungseinheiten ein Datensatz erzeugt wird, welcher aus den Datenworten der einzelnen Vorverarbeitungseinheiten zusammengefügt wird, indem eine jeweils nächste Vorverarbeitungseinheit ihr Datenwort den empfangenen Datenwörtern der vorgeschalteten Vorverarbeitungseinheiten hinzufügt und an eine unmittelbar nachgeschaltete Vorverarbeitungseinheit weiterleitet. Der so aufgebaute Datensatz wird schließlich von der letzten Vorverarbeitungseinheit über eine Datenleitung an das Steuerungssystem übertragen. Da verschiedene Vorverarbeitungseinheiten unterschiedliche Anzahlen von Messdatenwerten an das Steuerungssystem übertragen können, kann eine jeweils folgende Vorverarbeitungseinheit der seriell verbundenen Vorverarbeitungseinheiten mittels der Informationen über die Anzahl der Bitgruppen den Zeitpunkt bestimmen, zu dem die Übertragung der vorgeschalteten Vorverarbeitungseinheit endet und ihr Datenwort an den empfangenen Datensatz anfügen und an eine nachgeschaltete Vorverarbeitungseinheit bzw. an das Steuerungssystem übertragen.

Eine zweite und dritte Bitgruppe umfassen vorteilhafterweise Statuswerte für die Datenwerte umfassen. Die Statuswerte könne in der Steuerungseinheit zur Überprüfung der Gültigkeit der übertragenen Messwertdaten verwendet werden.

In einer bevorzugten Ausführungsform werden mit den weiteren Bitgruppen die Messwertdaten übertragen. Gemäß einer diesbezüglich zweckmässigen Weiterentwicklung wird mit einer letzten zu übertragenden Bitgruppe eine Überprüfungssumme übertragen. Durch die letzte Bitgruppe mit der Überprüfungssumme wird eine sichere und vollständige Übertragung der Bitgruppen und damit der übertragenen Messwertdaten gewährleistet.

Das Datenwort umfasst eine Vielzahl von Bitgruppen, wobei für jede Bitgruppe 16 Bit verwendet werden. Eine solche Aufteilung wird durch die verwendete Software und Hardware unterstützt und führt dadurch zu einer zeitsparenden und kostengünstigen Bearbeitung.

In vorteilhafter Ausgestaltung erfolgt die Kodierung einzelner Bits erfolgt mittels einer Biphasen-Kodierung. Dadurch ist gewährleistet, dass ein Synchronisationssignal zwischen einzelnen Datenworten eindeutig definierbar ist, da durch die Biphasen-Kodierung der Bits der Datenworte nicht mehr als zweimal aufeinanderfolgend der gleiche zustand, low oder high, in einem Datenwort auftritt. Eine Folge von drei oder mehr low-Signale hintereinander bedeutet, dass keine Datenworte, sondern beispielsweise ein Synchronisationssignal übertragen wird. Das Synchronisationssignal ist aufgrund der Biphasenkodierung einfacher und damit sicherer identifizierbar.

Eine erste zu übertragende Bitgruppe für die Identifizierungsdaten der jeweiligen Vorverarbeitungseinheit und die Informationen über die Anzahl der von dieser Vorverarbeitungseinheit zu übertragenden Bitgruppen verwenden jeweils 8 Bit.

In zweckmäßiger Ausgestaltung wird die letzte Bitgruppe zur Überprüfung der Übertragung durch eine CRC-Checksumme mit einem CCITT-Generatorpolynom gebildet wird. Mit der CRC-Checksumme und dem CCITT-Generatorpolynom, die als solche dem Fachmann bekannt sind, ist eine einfache und sichere Überprüfung der Gültigkeit der übertragenen Datenwerte möglich.

In weiterer Ausgestaltung der Erfindung sind die Datenworte der jeweiligen Vorverarbeitungseinheien durch ein Synchronisationssignal voneinander getrennt. Eine solche Trennung ermöglicht eine nachfolgende einfache weitere Datenverarbeitung im Steuerungssystem der HGÜ-Anlage.

Für das Synchronisationssignal kann eine Anzahl von mehr als zwei aufeinanderfolgende "low"-Signalen verwendet werden. "low"-Signale sind dabei die einem Nullzustand der Daten entsprechenden Signale.

In vorteilhafter Ausgestaltung weist das Synchronisationssignal einer ersten Vorverarbeitungseinheit eine größere Anzahl von "low"-Signalen als die Synchronisationssignale der weiteren Vorverarbeitungseinheiten auf. Ein solches längeres Synchronisationssignal ist besonders vorteilhaft, da damit der Beginn des Datensatzes definiert ist.

In einer zweckmäßigen Ausgestaltung werden die Daten optisch übertragen. Dies ist besonders vorteilhaft, da eine optische Übertragung von digitalen Daten über Lichtwellenleiter unempfindlich gegenüber elektromagnetischen Störungen ist.

Die Erfindung wird nachfolgend anhand eines Ausführungsbeispieles unter Bezugnahme auf die Zeichnung erläutert.

Es zeigen:
- Figur 1: eine beispielhafte Anordnung von mehreren Vorverar- beitungseinheiten zur Anwendung des erfindungsge- mäßen Verfahrens;
- Figur 2: ein Beispiel des Aufbaus eines einzelnen Datenwor- tes;
- Figur 3: den Aufbau von Datensätzen aus den Datenworten der einzelnen Vorverarbeitungseinheiten;
- Figur 4: eine schematische Darstellung der Kodierung der zu übertragenen Daten.

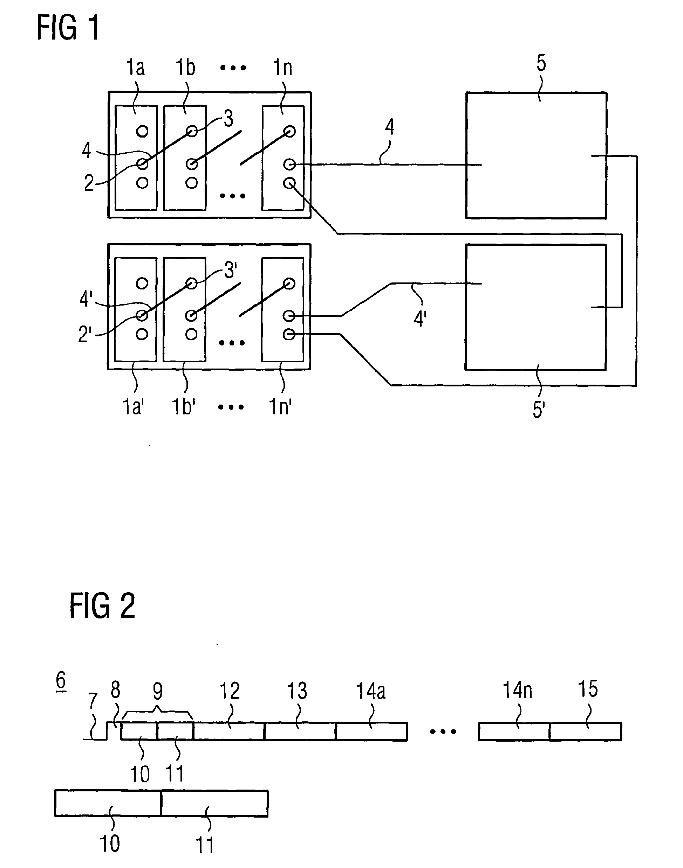

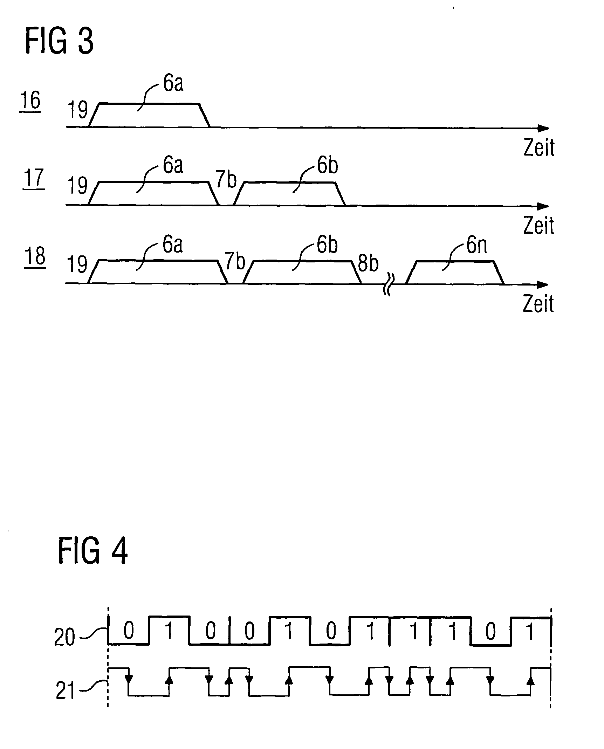

Figur 1 zeigt eine schematische Anordnung einer Vielzahl von Vorverarbeitungseinheiten 1a ... 1n, deren jeweiliger Ausgang 2 mit dem Eingang 3 der jeweiligen nächsten Vorverarbeitungseinheit über Lichtwellenleiter 4 verbunden sind. Der Ausgang der letzten Vorverarbeitungseinheit 1n ist über einen weiteren Lichtwellenleiter mit einem Steuerungssystem 5 verbunden. Die Vorverarbeitungseinheiten 1a ... 1n sind ferner mit verschiedenen nicht gezeigten Messeinheiten verbunden. In den Vorverarbeitungseinheiten werden Messwerte, die von den Messeinheiten übertragen wurden, vorverarbeitet und umgewandelt, so dass sie in einem Steuerungssystem der HGÜ-Anlage weiterverarbeitet werden können. Die vorverarbeiteten Daten werden am jeweiligen Ausgang 2 über den Lichtwellenleiter 4 an den Eingang der jeweils nächsten Vorverarbeitungseinheit übertragen und von dieser direkt zur nächsten Vorverarbeitungseinheit weiter übertragen. Diese nächste Vorverarbeitungseinheit fügt ihre Daten an die weitergereichten Daten an und überträgt die neuen Daten an eine weitere Vorverarbeitungseinheit. Von der letzten Vorverarbeitungseinheit 1n werden die Daten an das Steuerungssystem 5 übertragen. Die erste Vorverarbeitungseinheit 1a wirkt dabei als Mastereinheit. Die Funktion der Mastereinheit 1a wird nachfolgend mit Bezug auf die Figur 3 erläutert.

In Figur 1 ebenfalls dargestellt ist eine Anordnung weiterer Vorverarbeitungseinheiten 1a'... 1n' und eines weiteren Steuerungssystems 5', die zusammen mit den Vorverarbeitungseinheiten 1a ... 1n und dem Steuerungssystem 5 ein redundantes Steuerungs- und Überwachungssystem der HGÜ-Anlage ausbilden, indem ein jeweiliger zweiter Ausgang der letzten Vorverarbeitungseinheit 1n bzw. 1n' mit einem zweiten Eingang des jeweils anderen Steuerungssystems 5' bzw. 5 verbunden ist. Bei einer solchen Ausgestaltung werden die Messwerte der Messeinheiten an wenigstens zwei Anordnungen von Vorverarbeitungseinheiten übertragen und von diesen jeweils an wenigstens zwei Steuerungssysteme, so dass beim Ausfall einer Anordnung von Vorverarbeitungseinheiten oder eines Steuerungssystems das jeweils andere deren Funktion übernehmen kann.

In Figur 2 dargestellt ist die zeitliche Reihenfolge, in der die Daten einer einzelnen Vorverarbeitungseinheit nach dem erfindungsgemäßen Verfahren übertragen werden. Ein Datenwort 6 beginnt mit einem Synchronisationssignal 7, an welches sich ein Startbit 8 anschließt. Danach folgen mehrere Bitgruppen 9... 14n mit einer Länge von jeweils 16 Bit sowie am Ende eine Prüfbitgruppe 15. Die erste Bitgruppe 9 umfasst zwei Teilbitgruppen 10 und 11 mit einer Länge von jeweils 8 Bit.

Die Teilbitgruppe 10 wird dabei mit einer Bitfolge von die jeweilige Vorverarbeitungseinheit kennzeichnenden Werten besetzt. Die Teilbitgruppe 11 umfasst Informationen über die Anzahl der folgenden Bitgruppen entsprechend der Anzahl der Messwerte sowie der Status- und Prüfbitgruppen. Die Bitgruppen 12 und 13 umfassen Informationen über den Status der einzelnen zu übertragenden Messwerte. Diese Informationen über den Status der Messwerte werden von der Vorverarbeitungseinheit generiert und beinhalten Informationen bezüglich Gültigkeit der Messwerte und durchgeführter Vorverarbeitungsschritte. Daran anschließend folgen mehrere Bitgruppen 14a,... 14n, von denen jede Bitgruppe einem bestimmten Messwert der Vorverarbeitungseinheit entspricht. Die Bitgruppe 15 am Ende dient zur Überprüfung einer gesicherten Übertragung der mit diesem Datenwort übertragenen Daten.

Figur 3 zeigt einen Datensatz 16 mit einem Datenwort 6a der ersten Vorverarbeitungseinheit, einen Datensatz 17 mit dem Datenwort 6a und einem weiteren Datenwort 6b der zweiten Vorverarbeitungseinheit sowie einen Datensatz 18 als Folge von mehreren Datenworten 6a...6n entsprechend der Figur 2. Der Datensatz wird dabei aus den einzelnen Datenworten der jeweiligen Vorverarbeitungseinheiten 1a, ... 1n zusammengefügt. Die erste Vorverarbeitungseinheit 1a, die als Mastereinheit verwendet wird, beginnt die Datenübertragung mit einem Mastersynchronisationssignal 19. Nach diesem Mastersynchronisationssignal 19 überträgt die Vorverarbeitungseinheit 1a ein Datenwort 6a, welches das in Figur 2 dargestellte Format aufweist. Dieses Datenwort 6a umfasst, wie bereits oben ausgeführt, eine Teilbitgruppe 11, welche die Anzahl der Bitgruppen innerhalb des Datenwortes 6a beinhaltet. Aus dieser Information wird in der Vorverarbeitungseinheit 1b der Zeitpunkt bestimmt, wann diese Vorverarbeitungseinheit 1b ihr Synchronisationssignal 7b und ihr Datenwort 6b an das empfangene und weitergereichte Datenwort 6a hinzufügen kann, und so den Datensatz 17 erzeugt. Auf diese Art überträgt jede der weiteren folgenden Vorverarbeitungseinheiten 1c,... 1n am Ende des Datenwortes der ihr vorhergehenden Vorverarbeitungseinheit ihr jeweiliges Synchronisationssignal und ihr Datenwort, so dass am Ausgang der letzten Vorverarbeitungseinheit 1n der Datensatz 18, wie in Figur 3 dargestellt, vorliegt, welcher über eine Datenleitung 4 an eine Steuerungseinheit 5 zur weiteren Verarbeitung übertragen werden kann.

Figur 4 zeigt schematisch die Kodierung der in der jeweiligen Vorverarbeitungseinheit vorliegenden Messwerte 20 zu kodierten Übertragungsdaten 21. Die dargestellte Kodierung ist als so genannte Biphasen-Kodierung bekannt. Bei einer derartigen Kodierung wird jeweils ein Messbit je nach Wertigkeit mittels eines 0->1 oder 1->0 Signalwechsels übertragen. Durch diese Kodierung wird gewährleistet, dass niemals mehr als zwei aufeinanderfolgende low- oder high-Zustände in einem Datenwort auftreten. Die dargestellten Messwerte 20 bestehen aus low- und high-Signalen. Die low-Signale sind als 0, die high-Signale durch eine 1 verdeutlicht. Aus den kodierten Übertragungsdaten 21 ist ersichtlich, dass auch ausgehend von Messwerten 20, die mehrere aufeinander folgende low- oder high-Signalen aufweisen, die kodierten Übertragungsdaten 21 keine unmittelbar aufeinander folgenden low- oder high-Signale aufweisen.

Mit einer derartigen Kodierung kann ein Synchronisationssignal eindeutig definiert werden, indem beispielsweise mehr als drei low-Zustände aufeinander folgen. Im vorliegenden Beispiel ist das von der Mastereinheit 1a übertragende MasterSynchronisationssignal 19 eine Folge von 13 low-Signalen, und die von den weiteren Vorverarbeitungseinheiten 1b, ... 1n übertragenen Synchronisationssignale 7b, ... 7n bestehen aus sieben aufeinander folgenden low-Signalen.

### Bezugszeichenliste

- 1a, ... 1n: Vorverarbeitungseinheiten
- 2: Ausgang
- 3: Eingang
- 4: Lichtwellenleiter
- 5: Steuerungssystem
- 6: Datenwort
- 7: Synchronisationssignal
- 8: Startbit
- 9: Erste Bitgruppe
- 10: Teilbitgruppe kennzeichnende Daten
- 11: Teilbitgruppe Information Messdaten
- 12: zweite Bitgruppe Messwertstatus
- 13: Dritte Bitgruppe Messwertstatus
- 14a, ... 14n: Bitgruppen Messwerte
- 15: Bitgruppe Übertragungssumme
- 16: Datensatz aus 1a
- 17: Datensatz aus 1b
- 18: Datensatz aus 1n
- 19: Mastersynchronisationssignal
- 20: Messdaten
- 21: Übertragungsdaten

## Patentansprüche

1. Verfahren zur Übertragung von Daten in einer HGÜ-Anlage, bei dem Messwerte von Messeinheiten der HGÜ-Anlage an zugeordnete Vorverarbeitungseinheiten (1a...1n) übertragen werden, welche seriell miteinander verbunden sind, und die Vorverarbeitungseinheiten (1a...1n) aus den empfangenen Messwerten verarbeitbare Messwertdaten erzeugen, wobei die Messwertdaten als Teil eines Datensatzes (18) übertragen werden, der aus Datenworten (6a...6n) zusammengesetzt ist, und die Datenworte (6a...6n) bei der Übertragung in eine zeitliche Folge einzelner Bitgruppen (9,11,12,13,14a...14n,15) unterteilt werden, und eine erste zu übertragende Bitgruppe (9) Identifizierungsdaten (10) der zugeordneten Vorverarbeitungseinheit und Informationen (11) über die Anzahl der von dieser Vorverarbeitungseinheit zu übertragenden weiteren Bitgruppen (12,13,14a...14n,15) umfasst, und wobei eine seriell nachgeschaltete Vorverarbeitungseinheit mittels der Informationen über die die Anzahl der zu übertragenden Bitgruppen einer ihr seriell vorgeschalteten Vorverarbeitungseinheit einen Zeitpunkt zur Übertragung des Datenwortes dieser nachgeschalteten Vorverarbeitungseinheit bestimmt.

2. Datenübertragungsverfahren nach Anspruch 1,
**dadurch gekennzeichnet, dass**
mit zweiten und dritten zu übertragenden Bitgruppen (12,13) Statuswerte der Messwertdaten übertragen werden.

3. Datenübertragungsverfahren nach Anspruch 2,
**dadurch gekennzeichnet, dass**
mit den weiteren Bitgruppen (14a...14n) Messwertdaten übertragen werden.

4. Datenübertragungsverfahren nach Anspruch 3,
**dadurch gekennzeichnet, dass**
mit einer letzten zu übertragenden Bitgruppe (15) eine Überprüfungssumme übertragen wird.

5. Datenübertragungsverfahren nach Anspruch 4,
**dadurch gekennzeichnet, dass**
für jede Bitgruppe (9,11,12,13,14a...14n,15) 16 Bit verwendet werden.

6. Datenübertragungsverfahren nach Anspruch 5,
**dadurch gekennzeichnet, dass**
einzelne Bits mittels einer Biphasen-Kodierung kodiert werden.

7. Datenübertragungsverfahren nach Anspruch 1,
**dadurch gekennzeichnet, dass**
die erste zu übertragende Bitgruppe (9) für die Identifizierungsdaten (10) der jeweiligen Vorverarbeitungseinheit und Informationen (11) über die Anzahl der von dieser Vorverarbeitungseinheit zu übertragenden weiteren Bitgruppen jeweils 8 Bit verwendet.

8. Datenübertragungsverfahren nach Anspruch 4,
**dadurch gekennzeichnet, dass**
die Überprüfungssumme der letzten zu übertragenden Bitgruppe (15) durch eine CRC-Checksumme mit einem CCITT-Generatorpolynom gebildet wird.

9. Datenübertragungsverfahren nach Anspruch 1,
**dadurch gekennzeichnet, dass**
die Datenworte (6a...6n) der jeweiligen Vorverarbeitungseinheiten (1a...1n) durch ein Synchronisationssignal (19, 7b...7n) voneinander getrennt sind.

10. Datenübertragungsverfahren nach Anspruch 9,
**dadurch gekennzeichnet, dass**
für die Synchronisationssignale (19,7b...7n) eine Anzahl von mehr als zwei aufeinanderfolgenden "low"-Signalen verwendet wird.

11. Datenübertragungsverfahren nach Anspruch 10,
**dadurch gekennzeichnet, dass**
das Synchronisationssignal (19) einer ersten Vorverarbeitungseinheit (1a) eine größere Anzahl von "low"-Signalen als die Synchronisationssignale (7b...7n) der weiteren Vorverarbeitungseinheit (1b...1n) aufweist.

12. Datenübertragungsverfahren nach einem der vorhergehenden Ansprüche,
**dadurch gekennzeichnet, dass**
die Daten optisch übertragen werden.

## Claims

1. Method for transmission of data in an HVDC transmission installation, in which measured values from measurement units in the HVDC transmission installation are transmitted to associated preprocessing units (1a...1n), which are connected in series with one another, and the preprocessing units (1a...1n) use the received measured values to produce measured value data which can be processed, with the measured value data being transmitted as part of a data record (18) which is composed of data words (6a...6n), and with the data words (6a...6n) being subdivided for transmission into a time sequence of individual bit groups (9, 11, 12, 13, 14a...14n, 15) and with a first bit group (9) to be transmitted comprising identification data (10) for the associated preprocessing unit and information (11) about the number of further bit groups (12, 13, 14a...14n, 15) to be transmitted by this preprocessing unit, and with a series downstream preprocessing unit using the information about the number of bit groups to be transmitted from a preprocessing unit that is in series upstream of it to determine a time for transmission of the data word of this downstream preprocessing unit.

2. Data transmission method according to Claim 1,
**characterized in that**
status values of the measured value data are transmitted with the second and third of the bit groups (12, 13) to be transmitted.

3. Data transmission method according to Claim 2,
**characterized in that**
measured value data is transmitted with the further bit groups (14a...14n) .

4. Data transmission method according to Claim 3,
**characterized in that**
a checksum is transmitted with the final bit group (15) to be transmitted.

5. Data transmission method according to Claim 4,
**characterized in that**
16 bits are used for each bit group (9, 11, 12, 13, 14a...14n, 15) .

6. Data transmission method according to Claim 5,
**characterized in that**
individual bits are coded by means of bi-phase coding.

7. Data transmission method according to Claim 1,
**characterized in that**
the first bit group (9) to be transmitted in each case uses 8 bits for the identification data (10) for the respective preprocessing unit and for the information (11) about the number of further bit groups to be transmitted by this preprocessing unit.

8. Data transmission method according to Claim 4,
**characterized in that**
the checksum of the final bit group (15) to be transmitted is formed by a CRC checksum with a CCITT generator polynomial.

9. Data transmission method according to Claim 1,
**characterized in that**
the data words (6a...6n) of the respective processing units (1a...1n) are separated from one another by a synchronization signal (19, 7b...7n) .

10. Data transmission method according to Claim 9,
**characterized in that**
a total number of more than two successive "low" signals are used for the synchronization signals (19, 7b...7n).

11. Data transmission method according to Claim 10,
**characterized in that**
the synchronization signal (19) of a first preprocessing unit (1a) has a greater number of "low" signals than the synchronization signals (7b...7n) of the further preprocessing unit (1b...1n) .

12. Data transmission method according to one of the preceding claims,
**characterized in that**
the data is transmitted optically.

## Revendications

1. Procédé de transmission de données dans une installation de transmission de courant continu de haute tension, dans lequel on transmet des valeurs de mesure d'unités de mesure de l'installation de transmission de courant continu de haute tension à des unités ( 1a...1n ) de prétraitement associées, qui sont montées entre elles en série, et les unités ( 1a...1n ) de prétraitement produisent, à partir des valeurs de mesure reçues, des données de valeur de mesure pouvant être traitées, les données de valeur de mesure étant transmises en tant que partie d'un jeu ( 18 ) de données, qui est composé de mots ( 6a...6n ) de données, et les mots ( 6a...6n ) de données étant subdivisés lors de 1a transmission en une succession dans le temps de groupes ( 9,11,12,13,14a...14n,15 ) de bits individuels et un premier groupe ( 19 ) de bits à transmettre comprenant des données ( 10 ) d'identification de l'unité de prétraitement associée et des informations ( 11 ) sur le nombre des autres groupes ( 12,13,14a...14n,15 ) de bits à transmettre par cette unité de prétraitement, et dans lequel une unité de prétraitement montée en aval en série détermine, au moyen des informations sur le nombre des groupes de bites à transmettre à une unité de prétraitement montée en série en amont de celle-ci, un instant pour la transmission du mot de données de cette unité de prétraitement montée en aval.

2. Procédé de transmission de données suivant la revendication 1,
**caractérisé**
**en ce qu'**on transmet des valeurs de statut des données des valeurs de mesure par des deuxièmes et troisièmes groupes ( 12,13 ) de bits à transmettre.

3. Procédé de transmission de données suivant la revendication 2,
**caractérisé**
**en ce qu'**on transmet des données de valeur de mesure par les autres groupes ( 14a...14n ) de bits.

4. Procédé de transmission de données suivant la revendication 3,
**caractérisé**
**en ce qu'**on transmet une somme de contrôle par un dernier groupe ( 15 ) de bits à transmettre.

5. Procédé de transmission de données suivant la revendication 4,
**caractérisé**
**en ce qu'**on utilise 16 bits pour chaque groupe ( 9, 11, 12, 13, 14a...14n, 15 ) de bits.

6. Procédé de transmission de données suivant la revendication 5,
**caractérisé**
**en ce qu'**on code des bits individuels au moyen d'un codage à deux phases.

7. Procédé de transmission de données suivant la revendication 1,
**caractérisé**
**en ce que** le premier groupe ( 9 ) de bits à transmettre utilise, pour les données ( 10 ) d'identification de l'unité de prétraitement de l'unité respective et pour les informations ( 11 ) sur le nombre des autres groupes de bits à transmettre par cette unité de prétraitement, respectivement 8 bits.

8. Procédé de transmission de données suivant la revendication 4,
**caractérisé**
**en ce qu'**on forme la somme de contrôle du dernier groupe ( 15 ) de bits à transmettre par une somme de contrôle CRC avec un polynome générateur CCITT.

9. Procédé de transmission de données suivant la revendication 1,
**caractérisé**
**en ce que** l'on sépare les uns des autres par un signal ( 19, 7b, 7n ) de synchronisation les mots ( 6a...6n ) de données des unités ( 1a...1n ) de prétraitement respectives.

10. Procédé de transmission de données suivant 1a revendication 9,
**caractérisé**
**en ce que** l'on utilise pour les signaux ( 19, 7b...7n ) de synchronisation un nombre de plus de deux signaux « low » successifs.

11. Procédé de transmission de données suivant 1a revendication 10,
**caractérisé**
**en ce que** le signal ( 19 ) de synchronisation d'une première unité ( 1a ) de prétraitement a un nombre de signaux « low » plus grand que les signaux ( 7b...7n ) de synchronisation de l'autre unité ( 1b...1n ) de prétraitement.

12. Procédé de transmission de données suivant l'une des revendications précédentes,
**caractérisé**
**en ce que** l'on transmet des données par voie optique.
